(19) Europäisches Patentamt
European Patent Office
Office européen des brevets

(11) **EP 4 109 299 A1**

(12) **EUROPEAN PATENT APPLICATION**

(43) Date of publication:
**28.12.2022 Bulletin 2022/52**

(21) Application number: **21181498.3**

(22) Date of filing: **24.06.2021**

(51) International Patent Classification (IPC):
*G06F 16/44* *(2019.01)*

(52) Cooperative Patent Classification (CPC):
**G06F 16/447**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Solutions and Networks Oy**
**02610 Espoo (FI)**

(72) Inventors:
• **RODRIGUEZ-NAVAS, Guillermo**
**9355403 JERUSALEM (IL)**

• **GOLDSTEIN, Maayan**
**4464301 KFAR SAVA (IL)**
• **VAN CUTSEM, Tom Armand**
**3010 KESSEL LO (BE)**
• **VANDEPUTTE, Frederik**
**1070 ANDERLECHT (BE)**
• **THEETEN, Bart**
**9112 SINAAI (BE)**

(74) Representative: **Novagraaf Technologies**
**Bâtiment O2**
**2, rue Sarah Bernhardt**
**CS90017**
**92665 Asnières-sur-Seine Cedex (FR)**

(54) **INTERACTIVE GENERATION OF QUERIES FOR TIMED ANNOTATED MEDIA ITEMS**

(57) A method comprising: obtaining (910) a first user query defined by a user; providing (920) a user with first search results resulting from a first search performed on timed annotated media items on the basis of the first user query, wherein the first search results include at least one media item and one or more timed annotations of the at least one media item, the one or more timed annotations including labels associated with timestamps; displaying (930) temporal properties of the at least one media item, the temporal properties being determined on the basis of the one or more timed annotations; allowing (940) the user to define on the basis of the displayed temporal properties a second user query expressing at least one temporal constraint; providing (950) the user with second search results resulting from a second search performed on timed annotated media items on the basis of the second user query.

EP 4 109 299 A1

FIG. 9

**Description**

TECHNICAL FIELD

Various example embodiments relate generally to method and apparatus for generation of queries for timed annotated media items.

BACKGROUND

Recent developments in computer vision (CV) enable real-time detection of objects and events in video footage. Using such techniques, videos can be annotated with labels on the detected activities/objects/events. These annotations may be generated by a human or by a machine, e.g. using some machine learning application. These annotations and their corresponding timestamps can be stored in databases and exploited for fast identification and retrieval of scenes, but also for further offline analysis.

A typical application domain of these techniques is video surveillance. For example, Intelligent Transportation Systems (ITS) can rely on these annotated videos to understand traffic conditions. Alternatively, multi-agent robot systems can use the annotations to identify mission-relevant situations, like goals or risks, appearing in the scenes.

Together with the ability to annotate videos and collect timestamps, the most important element of these surveillance applications is the ability to specify queries that correctly express what the user is looking for. For that, the user needs to have good knowledge of the annotations (which are usually domain-specific) as well as of the temporal operators allowed by the database systems (which are usually platform-specific).

Similar needs exist for various types of media items with timed annotations: the media items may not only be videos but also audio items, simulation graphics, 3D videos, etc, or any combination of these types of media items.

Various temporal sequences of activities/objects/events may need to be detected in the video footage. These activities/objects/events are sequences of annotations that happen in a certain order and under certain time constraints. For instance, the user can specify that event A should be followed by event B within 1 minute. The activities/objects/events may also need to include quantitative aspects, such as for instance number of events (event A should be followed by no more than 2 events B within 1 minute) or frequencies (event B happens at least once every 30 seconds), among others.

For a typical user, it may be challenging to express certain temporal sequences of activities/objects/events because of at least one of the following reasons:

- Complexity of the data model and difficulty to understand the semantics of the annotations using that model;
- Complexity of the query language syntax, particularly the temporal aspects;
- Complexity and/or uncertainty of the temporal sequence that needs to be detected, which makes it difficult for the user to specify it quantitatively with annotations and temporal constraints. Examples: "tailgating", "saturated intersection", "crowded entrance".

SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a method comprises:

- obtaining a first user query defined by a user;
- providing a user with first search results resulting from a first search performed on timed annotated media items on the basis of the first user query, wherein the first search results include at least one media item and one or more timed annotations of the at least one media item, the one or more timed annotations including labels associated with timestamps;
- displaying temporal properties of the at least one media item, the temporal properties being determined on the basis of the one or more timed annotations;
- allowing the user to define on the basis of the displayed temporal properties a second user query expressing at least one temporal constraint;
- providing the user with second search results resulting from a second search performed on timed annotated media items on the basis of the second user query.

According to one or more example embodiments, allowing the user to define the second user query comprises allowing the user to select among the displayed temporal properties at least one temporal property of interest and to define a parameter of the at least one temporal constraint based on the at least one temporal property of interest.

According to one or more example embodiments, the displayed temporal properties include at least one value of a metric and at least one mathematical operator applicable to the metric, wherein the at least one value together with the at least one mathematical operator express at least one search criterion fulfilled by the at least one media item.

According to one or more example embodiments, the displayed temporal properties include at least one value of a metric, wherein allowing the user to define a second user query comprises allowing the user to adjust the at least one value, wherein the at least one temporal constraint is defined based on the adjusted value.

According to one or more example embodiments, the displayed temporal properties include at least one mathematical operator applicable to the metric, wherein allowing the user to define the second user query comprises allowing the user to modify the mathematical operator, wherein the at least one temporal constraint is defined based the modified mathematical operator.

According to one or more example embodiments, the displayed temporal properties include a time diagram representing variations over time of a metric, wherein allowing the user to define the second user query comprises allowing the user to define a threshold on the time diagram so as to define the at least one temporal constraint on the basis of the threshold and the metric.

According to one or more example embodiments, the displayed temporal properties include a time diagram representing variations over time of a metric, wherein allowing the user to define a second user query comprises allowing the user to select a portion of the time diagram corresponding to a time period of interest corresponding to so as to define the at least one temporal constraint on the basis of the variations over time of the metric in the time period of interest.

According to one or more example embodiments, the temporal properties include at least one statistical temporal property computed over a time window on the basis of the labels and timestamps associated with the timed annotations.

According to one or more example embodiments, the temporal properties include at least one temporal pattern detected in the at least one media item on the basis of the labels and timestamps associated with the timed annotations.

At least one other example embodiment provides an apparatus comprising at least one processor and at least one memory including computer program code. The at least one memory and the computer program code are configured to, with the at least one processor, cause the apparatus to: obtain a first user query defined by a user; provide a user with first search results resulting from a first search performed on timed annotated media items on the basis of the first user query, wherein the first search results include at least one media item and one or more timed annotations of the at least one media item, the one or more timed annotations including labels associated with timestamps; display temporal properties of the at least one media item, the temporal properties being determined on the basis of the one or more timed annotations; allow the user to define on the basis of the displayed temporal properties a second user query expressing at least one temporal constraint; provide the user with second search results resulting from a second search performed on timed annotated media items on the basis of the second user query.

Generally, the at least one memory and the computer program code are configured to, with the at least one processor, cause the apparatus to perform one or more or all steps of a method according to the first aspect as disclosed herein.

One or more example embodiments provide an apparatus comprising :means for obtaining a first user query defined by a user; means for providing a user with first search results resulting from a first search performed on timed annotated media items on the basis of the first user query, wherein the first search results include at least one media item and one or more timed annotations of the at least one media item, the one or more timed annotations including labels associated with timestamps; means for obtaining and displaying temporal properties of the at least one media item, the temporal properties being determined on the basis of the one or more timed annotations; means for allowing the user to define on the basis of the displayed temporal properties a second user query expressing at least one temporal constraint; means for providing the user with second search results resulting from a second search performed on timed annotated media items on the basis of the second user query.

Generally, the apparatus comprises means for performing one or more or all steps of a method according to the first as disclosed herein. The means may include circuitry configured to perform one or more or all steps of the method according to the first, second or third aspect as disclosed herein. The means may include at least one processor and at least one memory including computer program code, wherein the at least one memory and the computer program code are configured to, with the at least one processor, cause the apparatus to perform one or more or all steps of the method according to the first aspect.

At least one example embodiment provides a non-transitory computer-readable medium storing computer-executable instructions that, when executed by at least one processor at an apparatus, cause the apparatus to perform a method according to the first aspect.

Generally, the computer-executable instructions cause the apparatus to perform one or more or all steps of a method according to the first aspect.

BRIEF DESCRIPTION OF THE DRAWINGS

Example embodiments will become more fully understood from the detailed description given herein below and the accompanying drawings, which are given by way of illustration only and thus are not limiting of this disclosure.

FIG. 1 illustrates some aspects of a method for generating queries for timed annotated media items according to an example embodiment.

FIG. 2 shows a schematic representation of a system for generating queries for timed annotated media items according to an example embodiment.

FIG. 3 illustrates some aspects of a method and system for generating queries for timed annotated media items according to an example embodiment.

FIG. 4 shows an example of a user interface for generating queries for timed annotated media items according to an example embodiment.

FIG. 5 shows an example of a user interface for generating queries for timed annotated media items according to an example embodiment.

FIG. 6 shows an example of a user interface for generating queries for timed annotated media items according to an example embodiment.

FIG. 7 shows an example of a user interface for generating queries for timed annotated media items according to an example embodiment.

FIG. 8 illustrates aspects of a method for generating queries for timed annotated media items according to an example embodiment.

FIG. 9 shows a flow chart of a method for generating queries for timed annotated media items according to an example embodiment.

FIG. 10 shows a block diagram of an apparatus according to an example embodiment.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

Timed annotated media items generally designate media items with timed annotation. Timed annotations allow to annotate the media items with labels and timestamps corresponding to occurrence of one or more events, where a label is usually a numerical or textual label (e.g. keywords, identifiers) describing / identifying an event. Each label may be associated with one or two timestamps. Two timestamps (start and end timestamps) are used to define a duration of the event and the corresponding time interval. A single timestamp is used to define a time of occurrence of the event in the media item.

Each label or annotation may further be associated with a confidence level expressing on a given scale (e.g. by a percentage or a number) how (un)certain the generated annotation is. For example, an object detector or activity detector may detect some object or activity with 80% confidence level. A confidence level can be used as search criteria in a search query and / or for filtering the results of a search query.

In the context of this document, it is to be noted that an "event" is not necessarily an instantaneous event (like switching on / off a light) but may have a given duration and may correspond to a given activity / operation (performed by a human and / or a machine) having a given duration, like "a person entering a building", "a person crossing the street", "opening a door", etc.

A method allowing iterative and interactive generation of search criteria of queries for searching in timed annotated media items is disclosed.

After an initial selection (e.g. based on an initial query), first search results are obtained that include a first set of one or more timed annotated media items. A user is allowed to define search criteria on the basis of the timed annotations (e.g. labels and their corresponding timestamps) and temporal properties of the first search results so as to define a new query (e.g. a refined query) which provides new search results including a second set of one or more timed annotated media items.

The interactive adjustment of search criteria may be repeated iteratively, i.e. on the basis of the timed annotations and temporal properties of the new search results, until the user obtains a final query that defines correctly the search criteria and provides the expected results. At each iteration, a new user query is generated on the basis of the new search results. To allow a user to refine a previous user query, the search criteria of the previous user query may be automatically kept as search criteria for the next user query and the user may keep all the search criteria of the previous user query or select only some of these search criteria if he / she wants to enlarge the scope of the search at the next iteration.

The search may also be performed at the beginning of the iterative process only on a part of the database to reduce the number of search results to be examined by the user until the final query is obtained and the final query is then used to search on the full database.

A temporal property of a media item may be any time-related property that can be computed on the basis of labels and associated timestamps of the media item. Other parameters like confidence levels of annotations may also be considered for some temporal properties. A temporal property may for example be :

- a criteria or property fulfilled by a timestamp;
- a duration, e.g. computed on the basis of timestamps (e.g. a duration of an annotation (event, activity, operation); a duration between two successive annotations (event, activity, operation), etc);
- a number of occurrences of an event per timestamp (i.e. number or simultaneous occurrences of an event);
- a quantitative metric per time unit, where the quantitative metric may be computed with any given time resolution, where the time resolution of the quantitative metric gives the duration of the time interval (e.g. 1 minute, 1 second, 10 seconds, etc) over which the quantitative metric is computed; a quantitative metric may be for example a counter, a number of occurrence of a given event, a frequency of occurrence of a given event; generally a quantitative metric may express a quantity or count;
- a statistical metric per time window, where the statistical metric is computed for a plurality of values of a given metric (e.g. quantitative metric or other metric) which are themselves computed with a given time resolution, where the statistical metric itself may be computed for a time window of given duration or over the full duration of a video; a statistical metric may be a total / minimum / maximal / average value / standard deviation computed for a set of values of a metric (e.g. based on the statistical distribution of these values);
- any metric per time unit / time window, where a metric may be any numerical parameter expressing for example a quantity (e.g. a quantitative metric), a probability (e.g. a confidence level of an annotation), a physical parameter (e.g. angle of a camera), a configuration parameter (a configuration parameter of a camera), etc;
- a temporal pattern of occurrence of one or more events (e.g. nothing during 10 minutes, then the event A occurs 3 times during 1 minute and then the event B occurs 2 times during the 2 minutes, etc);
- etc.

Any combination (e.g. logical combination) of one or more of these enumerated example temporal properties may also be considered as a temporal property and may be used to define a search criteria in a query.

The search criteria generated on the basis of temporal properties may express any type of constraint and may include temporal constraints or time-related parameter, for example:

- a mathematical constraint defined by one or more mathematical operators (e.g. #. $\leq$, $\geq$, $<$, $>$, $=$, logical operators like "AND", "OR", "XOR", etc) on one or more time-related parameters;
- a temporal pattern constraint defined on the basis of a time diagram (e.g. metric time diagram, annotation time diagram) and represented using temporal logics, such as e.g. MTL, MITL or Timed Automata.

A time-related parameter may be a timestamp, a duration, a quantitative metric per time unit, a statistical metric per time unit, a number of occurrences of an event per timestamp, etc.

A quantitative metric may be any numerical metric that may be computed based on one or more labels and their timestamps. A quantitative metric may be computed for a given timestamp or over a time interval that may be the full duration of a media item or a sliding window of a given duration. A quantitative metric may be a number of occurrences of a given event over a time interval (e.g. a number of persons entering a room within a time interval), a frequency of occurrence of a given event over a time interval, a quantitative metric expressed in a label (e.g. a number of persons present in a room at a given timestamp), etc.

In one or more examples, interactive human-computer interfaces may be used to allow users to define one or more search criteria on the basis of annotations and / or temporal properties of the media items retrieved as search results. The interactive human-computer interfaces may allow the user to perform a selection of annotations and / or temporal properties of interest and to define one or more new search criteria on the basis of the selected annotations and / or temporal properties of the retrieved timed annotated media items.

In one or more examples, the temporal properties and labels of the retrieved media items are presented in an interactive human-computer interface, e.g. in the form of editable search criteria that are fulfilled by the retrieved media items, wherein the editable search criteria may be selected and edited by a user to define a new query. Several types of search criteria editor may be used: for example metric-based criteria editor, signal-based criteria editor and label temporal pattern editor.

For example, a search criteria may be defined by one or more metrics and/or one or more mathematical operators applied to one or more metrics and the user may edit (e.g. in a metric-based criteria editor) the editable criteria by adjusting a value of a metric and / or changing the mathematical operator.

In one or more examples, the temporal properties and labels of the retrieved media items are presented graphically in an interactive human-computer interface, e.g. in the form of one or more time diagrams with which a user may interact (e.g. using a signal-based criteria editor) to define one or more search criteria, where the one or more time diagrams show variations over time of a parameter determined from timed annotations.

For example, a time diagram may be a metric time diagram representing the variations over time of a metric (e.g. quantitative metric, statistical metric, number or simultaneous occurrences of an event or other metric) and the user may define (e.g. using a signal-based criteria editor) one or more thresholds for the metric to define search criteria on the basis of the one or more thresholds (e.g. a search criterion may be that the value of the metric must be below or above the threshold or must be between two thresholds).

For example, a time diagram may be a metric time diagram representing the variations over time of a metric (e.g. quantitative metric, statistical metric, number or simultaneous occurrences of an event or other metric) and the user may select (e.g. using a signal-based criteria editor) one or more time segments in the time diagram to select one or more temporal patterns of interest for this metric to be converted into search criteria on the basis of the variations over time of a metric occurring in the selected one or more time segments.

For example, a time diagram may be an annotation time diagram representing number of occurrences of one or more labels over time and the user may select (e.g. using a signal-based criteria editor) one or more time segments in the time diagram to select one or more temporal patterns of interest for one or more labels to be converted into search criteria on the basis of the number of occurrences of one or more labels detected in the selected one or more time segments.

For example, a time diagram may be an annotation time diagram representing number of occurrences of one or more labels over time and including one timeline per label to allow the user to select (e.g. using a label temporal pattern editor) one or more labels of interest by selecting the corresponding timeline(s) and / or allow the user to define temporal patterns of labels based on the selected label(s).

This interactive generation of search criteria addresses in a convenient manner the problem of representing and refining the semantics and parameters of a given query, especially when temporal constraints have to be defined. It allows for example to express temporal constraints (e.g. sequencing of events, durations, statistical metrics per time unit, quantitative metrics per time unit, etc) in ways that can be easily interpreted and modified by the user since it relies on textual / explicit and / or graphical / implicit search criteria that are fulfilled by the retrieved search results that can be used as examples to illustrate concretely the type of media items that can be obtained with these search criteria. This system / method may thus be referred as a QBE, Query by Example system / method.

Although the interactive generation of search criteria is particularly useful for interactive refinement of queries intended for analysis of annotated videos, it may be used for other types of timed annotated media items. For example, it may be used to query databases or data streams of timed series of events coming from sensors or other sources of information that are not videos, but that could be analyzed analogously, like audio.

The method allows the user to i) identify the relevant labels of the intended query based on examples provided by the media items in the search results of the initial or current search; ii) identify and impose relevant sequences of annotations (temporal patterns of labels), by indicating which label(s) shall/may appear as well as the temporal order in which these labels should occur; iii) identify the right metrics to be used over time based on the examples and define appropriate thresholds on the quantitative metrics.

In each step of the iterative process, the user may specify some of the properties on labels, temporal patterns of one or more labels or metrics to be computed over one or more time windows / units. With that information, the system may generate an approximation of the intended query, which may be synthetized as one or as several user queries, and may submit the user queries to the query engine, which returns the search results. The search results may then be consolidated (e.g. duplicates are removed, for example when using several queries, it may be the case that two queries return video scenes that are overlapping), augmented with metrics defined / selected by the user as well as with other temporal properties that may be automatically generated by analysis of the labels and timestamps, and displayed on the user interface, such that a new refinement step can be executed. Once the user is satisfied with the obtained query results, the query refinement process is finished and a single query is generated in the query language of the video repository. The process does not provide a measure of accuracy or correctness and assumes that the user may decide when the obtained query is satisfactory.

The search criteria generated may express other type of search criteria that may be defined by the user in the seed query. By default, all search criteria defined by the user in the seed query may be automatically proposed as search criteria for the new query to be defined on the basis of the seed query. Likewise, all search criteria defined by the user in a current query may be automatically proposed as search criteria for the new query to be defined on the basis of the current query.

Another advantage is that the user is freed from the cognitive load of expressing a complex temporal property over annotations. Instead, the system allows the user to explore the existing annotations in the media items via a multimodal interface and may add / remove search criteria to the current search query (e.g. to constrain the query gradually) as the relevant labels and temporal patterns are shown in the retrieved search results. For further simplicity, the user may start the query refinement process by providing a simple query, the "seed query", e.g. by just selecting a media item and optionally a time window for the analysis, without even having to specify any label and let the system extract the labels from the selected media item.

For example, the end user might be interested in the following query: *"Show me a person entering, followed by another person entering, followed by another person entering, ... , with no more than two people entering within one second, all within four seconds".* Such a query may be extremely cumbersome to write as an explicit query but it may still be useful as a quantitative manner to identify a "crowded entrance". Therefore, by allowing the user to select a scene where people are seen entering through a door one after another and then automatically suggesting temporal constraints and / or temporal patterns (that were obtained as temporal properties from the selected scene) such as the total time the scene lasts and how many people should enter per second, the system takes this "quantification" burden away from the end user's shoulders.

The system may allow a semantic augmentation: the system collects annotations of media items retrieved as search results and extract temporal properties from the retrieved media items, e.g. from the labels and associated timestamps. The system may generate an interactive representation of these temporal properties such that the user may select and / or modify properties of interest by using the interactive representation and use the properties of interest for defining search criteria in the next refinement step. The temporal properties to be presented to the user may be selected in an automated manner or based on a selection of temporal properties (e.g. selected metrics) made by the user. These "augmented" videos allow the user to transform these temporal properties into search criteria (e.g. specific temporal patterns and temporal constraints).

The user is responsible for specifying at least some user's constraints by defining search criteria as parts of the search query to be used, but the final search query may be the result of a synthesis process that converts the user's constraints into a single query. However, for exploratory purposes, the system may use data augmentation by generating variations of the user-defined constraints and building the corresponding queries, such that the obtained search results show a larger variety of media items. When needed, the search results may be clustered in order to reduce the number of examples to be examined by the user.

The semantic augmentation and the interactive and iterative query synthesis method put emphasis on the temporal properties of the media items and their annotations, by showing and allowing the user to modify both the temporal order of the annotations as well as other relevant temporal properties (e.g. quantitative metrics per time units, statistical metrics per time windows, etc).

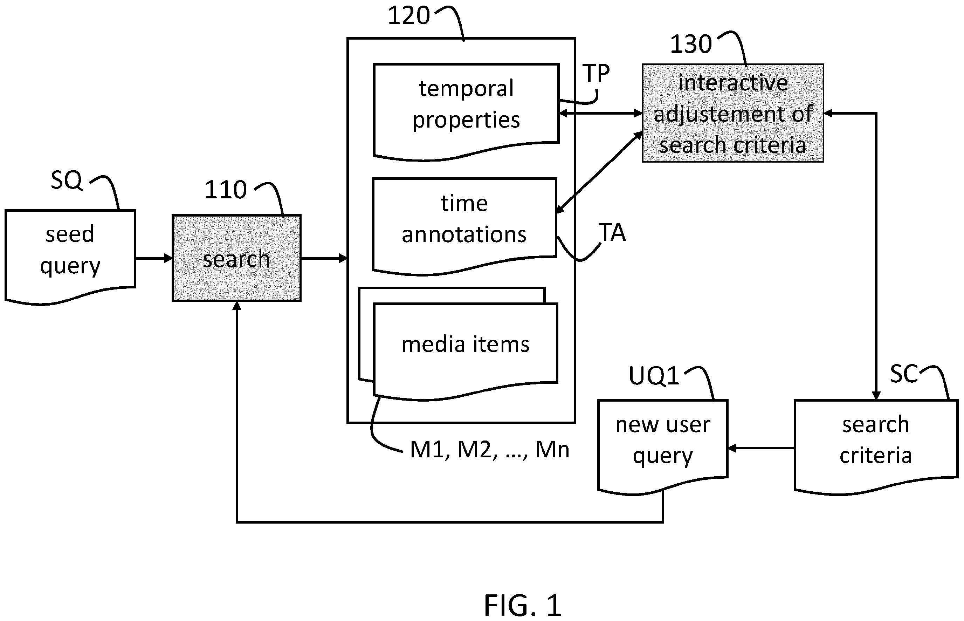

FIG. 1 illustrates some aspects of a method for generating queries for timed annotated media items.

The method is based on an interactive and iterative process allowing interactive adjustment 130 of search criteria based on temporal properties TP of one or more media items M1, M2, ..., Mn resulting from a search 110 based on an initial query SQ, also referred to herein as the seed query SQ. The temporal properties TP of the one or more media items M1, M2, ..., Mn are obtained by analysis of the time annotations TA (including labels LA and corresponding timestamps ST) of the one or more media items M 1, M2, ..., Mn. New search criteria SC result from the interactive adjustment 130 of the search criteria and are used to synthetized a new query UQ1. The new query UQ1 allows to perform a new search 110 and to generate new search results 120, including a new set of one or more media items M1, M2, ..., Mn, their time annotations TA and temporal properties TP such that the interactive adjustment 130 of search criteria may be performed iteratively on the basis of the new search results 120.

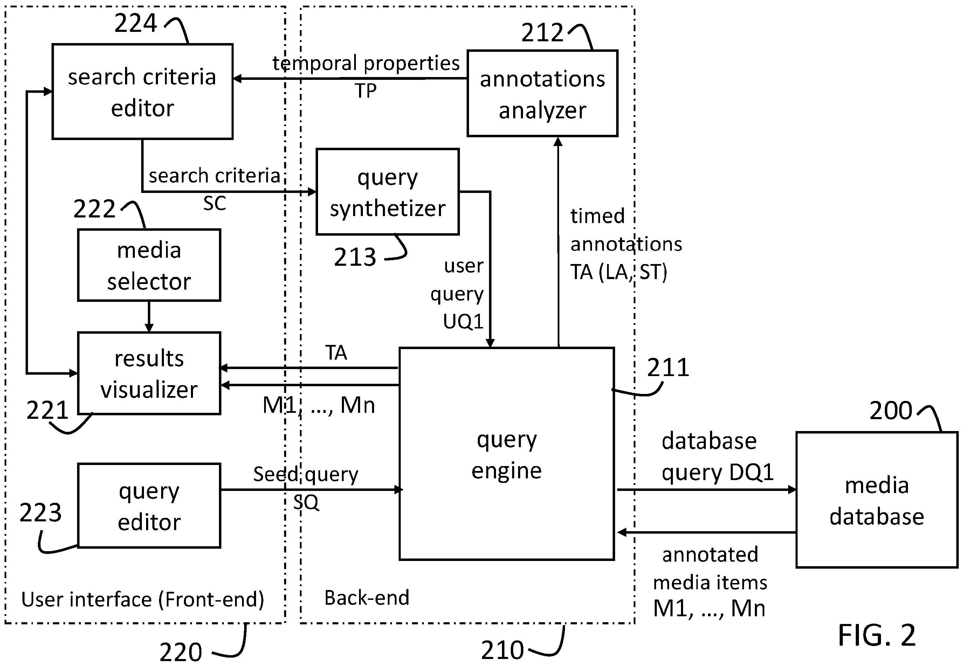

FIG. 2 shows a schematic representation of a system for generating queries for timed annotated media items. Examples will be given for media items that are videos, but these examples are for illustration purposes only.

The system includes a database 200, a back-end 210 and a front-end 220. The back-end may include a query engine 211, an annotation analyzer 212 and a query synthesizer 213. The front-end may include a results visualizer 221, a media selector 222, a query editor 223 and a search criteria editor 224.

The database 200 stores media items with their annotations (labels LA and associated timestamps ST). A user may access the media items stored in the database 200 via the query engine 211.

The annotation analyzer 212 is configured to perform a temporal analysis of one or more media items M1, M2, ...Mn on the basis of timed annotations TA (including labels LA and associated timestamps ST) of the one or more media items and to extract temporal properties (TP) resulting from this temporal analysis.

The results visualizer 221 is used to navigate through the search results, i.e. the retrieved media items and to render the media items (e.g. display the video, play the audio, etc) or at least portions of the media items. The results visualizer 221 is further configured to receive the timed annotations TA (including labels LA and associated timestamps ST) and to display the timed annotations using for example annotation time diagrams (e.g. activity diagrams for videos showing activities) showing the occurrences and duration of each annotation, its label and timestamp(s) as a function of time. Optionally, the results visualizer 221 may cluster similar media items together, and show to the end user one or more representative media items of each cluster, in this way reducing the burden on the end user of going through all the examples and thus shortening the refinement process.

The media selector 222 (e.g. a snippet selector) allows the user to select a specific media item of interest (such as footage from camera X on day Y), for example among a list of media items stored on a given storage medium.

The query editor 223 allows the user to define user queries using for example a textual editor. A user query may be defined in a natural language or using some specific query language based on logical operators. The search criteria may for example be defined using regular expressions (regex).

The search criteria editor 224 is configured to receive from the annotation analyzer 212 temporal properties (TP) and/or timed annotations (labels LA and associated timestamps ST) of one or more media items, to display in an interactive human-computer interface the temporal properties (TP) and/or timed annotations of the one or more media item and to allow the user to define one or more search criteria on the basis of the temporal properties (TP) and/or timed annotations. For example one or more interaction functions may be defined to allow the user to:

- select one or more temporal properties of interest and / or timed annotations of interest; and / or
- use the selected temporal properties and / or timed annotations as one or more search criteria of a search query; and / or
- transform the selected temporal properties and / or timed annotations into one or more search criteria of a search query using one or more interaction functions of the interactive human-computer interface.

The temporal properties may be automatically extracted by the annotations analyzer or be extracted upon request of the user, for example based on some predefined selectable named properties available in a menu, a drop down list of options, etc. For example the user may ask to calculate a given temporal property (a temporal parameter, a statistical metric, a temporal pattern, etc) with respect to one or more selected labels. For example the user select one or more statistical metrics (e.g. select "count" in a menu) to obtain values of the selected statistical metrics, for all or selected labels and for one or more media items (e.g. to display the total number of labels "person enters building" in one or more videos). For example, the user may select an option named "count" next to the annotation "person enters building" would indicate that the user is interested in counting the number of people entering the building. Other quantitative metrics per time unit may also be automatically computed when the search results are presented to the user, such as for example the average / maximum / minimum number of people entering the building per time unit.

The query synthesizer 213 is configured to receive one or more search criteria defined using the search criteria editor 224, to synthetize one or more user queries UQ1 and to provide the synthetized user queries UQ1 to the query engine 211. The query synthesizer 213 may generate a number of user queries in a query language based on the parameters of search criteria defined by the user. A query language could be based on a formal language such as timed automata or a timed regular expression.

The query engine 211 is configured to receive at least one user query (e.g. seed query SQ, user query UQ1) from the query editor 223 or from the query synthesizer 213, to interpret and convert the user query into a database query DQ1 written in some specific query language (e.g. SQL) adapted to the database 200 and to retrieve from the database 200 the timed annotated media items fulfilling the search criteria of the user query and returns the timed annotated media items with their timed annotations (labels LA and associated timestamps ST) to the user for enabling a rendering (e.g. displaying of video, playing audio content, displaying of labels LA and associated timestamps ST) by the results visualizer 221. The query engine 211 may be a Complex Event Processing (CEP) Engine (for example, the Siddhi streaming query language), but also a SQL or NoSQL query engine, etc.

For example, a user may use the media selector 222 and / or the query editor 223 to define one or more search criteria of a seed query. The user may for example select a specific media item, e.g. a video snippet. The user may then define the start and end timestamps in the video snippet of interest selected with the media selector 222, the start and end timestamps being used as search criteria of the seed query. Additionally, the user may select a specific area of interest on the screen (for example, by selecting an entrance to a parking lot) as further search criteria of the seed query.

Alternatively or in combination the user may define one or more search criteria of a seed query using the query editor 223 with a natural language interface. For example, the user may search for "a person opens a car trunk" and select relevant video footage out of a list of suggestions.

For this example seed query, the search results contain the selected video snippet, both the start and end timestamps that define a time window of interest, annotations of the selected video snippet (for example, "person talks over the phone", "person opens trunk", "car with its fog lights turned on", "a red truck"), along with their start/end timestamps, and (optionally) an area of interest in pixels.

For example, the search criteria editor 224 may display for viewing by the user a list of labels L1, L2, L3 associated to the selected video snippet resulting from a seed query, together with the search criteria of the seed query.

The search criteria editor 224 may be configured to allow a user to define search criteria in various ways on the basis of the labels LA, timestamps ST and temporal properties SP. For example one or more interaction functions may be defined to allow the user:

- To choose to include or exclude some of the labels in the search query;
- To define one or more labels as optional in the search query;
- To define a logical combination of labels (independently of their temporal order) as a search criteria; for example the combination "any label" means L1 OR L2 OR L3, i.e. at least one annotation must appear in the query result as a match for "any label";
- To define a specific temporal order between two or more labels as a search criteria, and optional defining a certain temporal order of labels where some labels are undefined;
- To define one or more thresholds for a metric (e.g. statistical metric per time window, quantitative metric per time unit, number of simultaneous occurrences of an event, a confidence level of a given annotation, etc) as search criteria of the search query;
- To define one or more logical conditions for one or more metrics using one or more operators applicable to the one or more metrics as search criteria of the search query;
- To define a temporal pattern for a metric (e.g. number of simultaneous occurrences of an event, statistical metric over time window, quantitative metric per time unit, confidence level of a given annotation, etc) as search criteria of the search query;
- To define a temporal pattern of events (e.g. event A followed by event B within less than T time units, event A preceded by event B within less than T time units, etc) as search criteria of the search query;
- To modify the time window of interest for the search query, which is otherwise automatically deduced from the seed query or previous search query;
- etc;

The output of the search criteria editor 224 is a set of search criteria SC defined by the user (e.g. the time window size, included / excluded / optional labels, temporal patterns of labels for which total / average / minimal / maximal number of occurrences per given time unit should fulfilled a given criteria compared to a given threshold, etc).

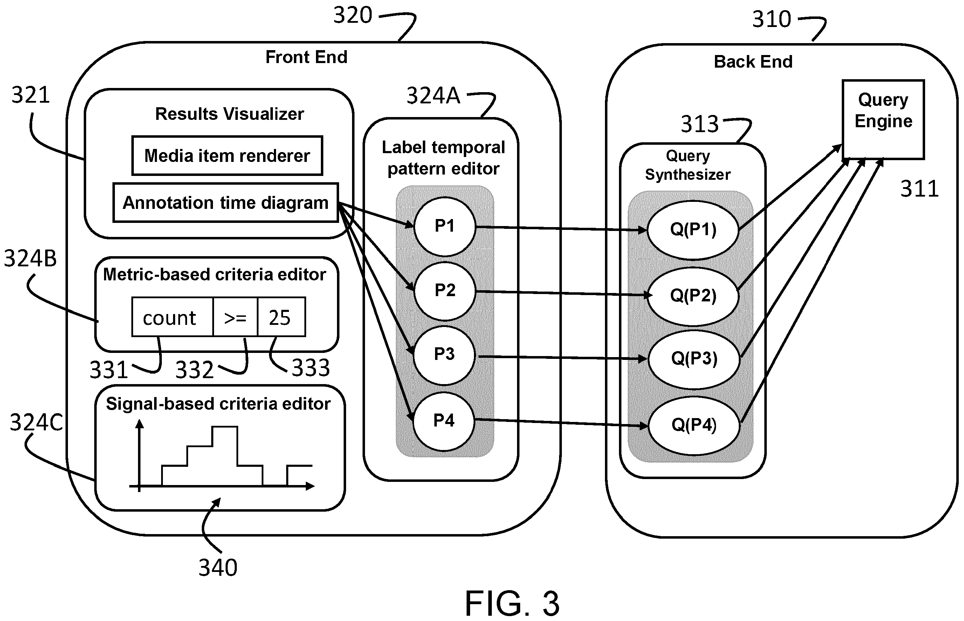

FIG. 3 illustrates some aspects of a method and system for generating queries for timed annotated media items. Examples will be given for media items that are videos, but these examples are for illustration purposes only.

The system is represented schematically and includes a back-end 310 and a front-end 210 similar to those described by reference to FIG. 2. The back-end may include a query engine 311 and a query synthesizer 313 similar to those described by reference to FIG. 2. The front-end may include a results visualizer 321 similar to that described by reference to FIG. 2 and a search criteria editor 324 (not represented) including several editors: a label temporal pattern editor 324A, a metric-based criteria editor 324B and a signal-based criteria editor 324C.

As described by reference to FIG. 2, the results visualizer 321 is used as media item rendered configured to navigate through the retrieved media items and render the media items. The results visualizer 321 is further configured to display the timed annotations using for example one or more annotation time diagrams (e.g. activity diagrams for videos showing activities) using one or more timelines.

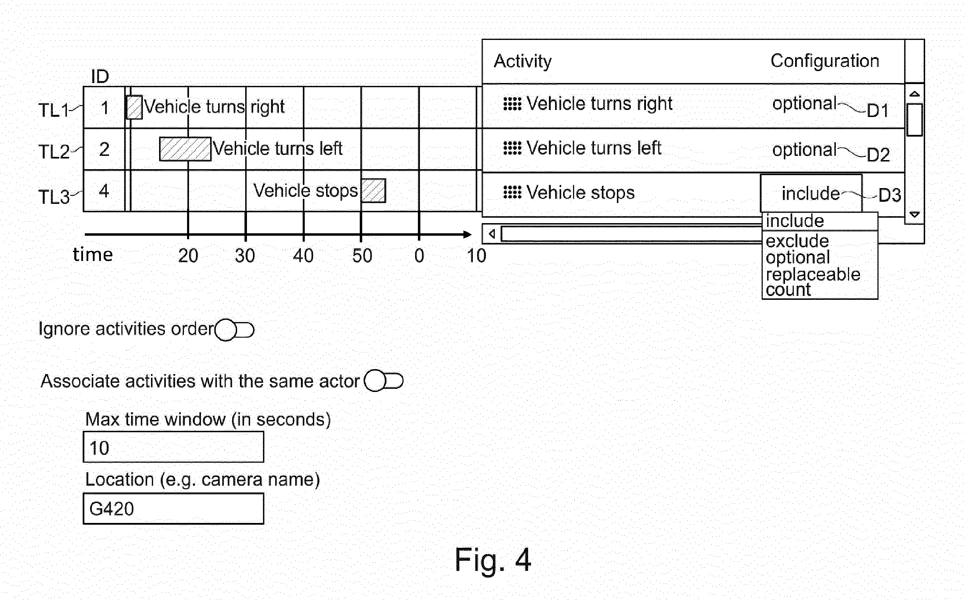

The label temporal pattern editor 324A may be configured to perform "semantic augmentation" by allowing a user to define as search criteria a label temporal pattern on the basis of the annotation time diagrams, e.g. by selecting one or more labels of interest by selecting the corresponding timeline(s) and / or allow the user to define temporal patterns of labels based on the selected label(s). An example label temporal pattern editor 324A is described by reference to FIG. 4.

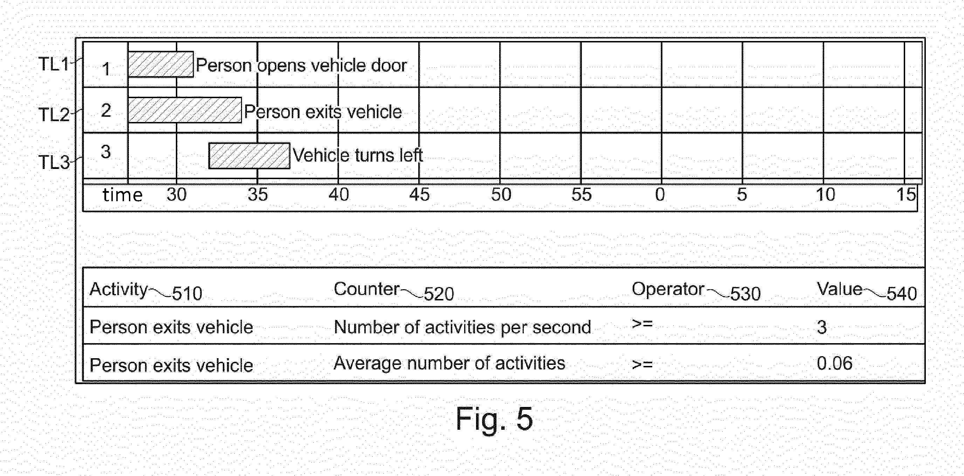

The metric-based criteria editor 324B may be configured to allow a user to define search criteria on the basis of one or more metrics (e.g. number of simultaneous occurrences of an event, statistical metric per time window, quantitative metric per time unit) and one or more mathematical operators applicable to one or more metrics. The user may edit the metric-based search criteria by selecting a metric 331 and / or adjusting one or more values 333 (e.g. thresholds) of the selected metric and / or selecting one or more mathematical operators 332 applicable to the one or more values 333. An example metric-based criteria editor 324B is described by reference to FIG. 5.

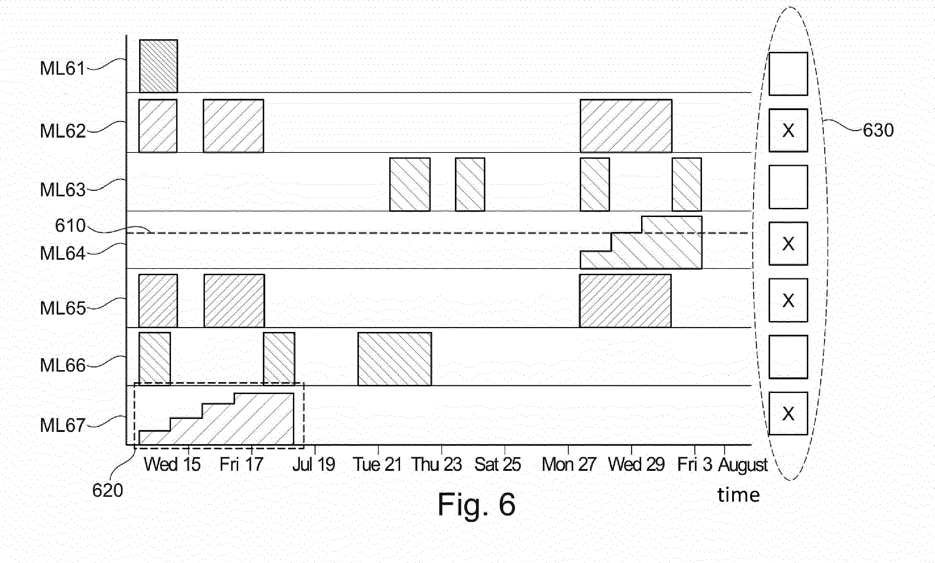

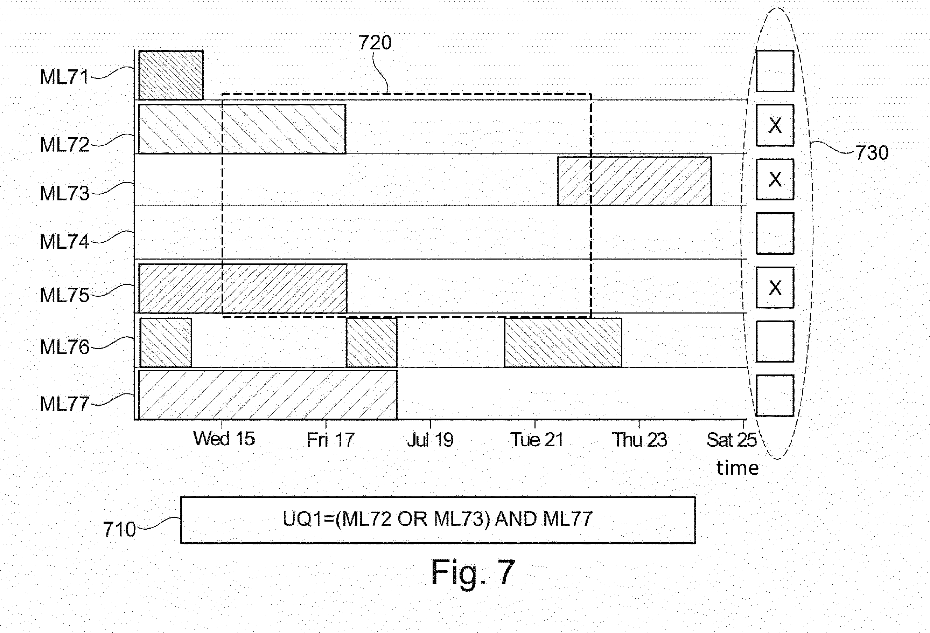

The signal-based criteria editor 324C may be configured to allow a user to define search criteria on the basis of one or more signal time diagrams 340 representing the variations over time of one or more metrics (e.g. per time unit, statistical metric per time window, quantitative metric per time unit) associated with timed label. The user may define one or more thresholds for the metric to define search criteria on the basis of the one or more thresholds (e.g. a search criterion may be that the value of the metric must be below or above the threshold or must be between two thresholds). The user may select one or more time segments in the time diagram to select one or more temporal patterns of interest for this metric to be converted into search criteria on the basis of the variations over time of a metric occurring in the selected one or more time segments. Example signal-based criteria editors 324C are described by reference to FIGS. 6 and 7.

The query synthesizer 313 may receive search criteria defined by using the label temporal pattern editor 324A, the metric-based criteria editor 324B and / or the signal-based criteria editor 324C. The query synthesizer 313 may be configured to perform data augmentation by automatic refinement of parameters of the received search criteria to broaden a search criteria defined on the basis of an example media item.

For example, when a metric is computed for a video, generally a single value of this metric is obtained. For instance, consider a video that satisfies a search criteria: *"Count ('people entering') = X'*, i.e. the number of times the event *"person entering a room"* detected in the video is equal to X. If the user wants to refine this search criteria, data augmentation may be automatically applied to compute a value above X (threshold X_high = g X) and a value below X (threshold X_low = 1/g X) where g > 1 is a dichotomic search coefficient. The value of g may be adjusted on the basis of some dichotomic search to optimize its value based on statistical analysis of potential search results. For example, if a given value of g would generate too many search results fulfilling the refined search criteria, then the value of g will be decrease until some dichotomic search criteria is met.

The resulting refined search criteria will be :

*Count('people entering') > X_low AND Count('people entering') < X_high*

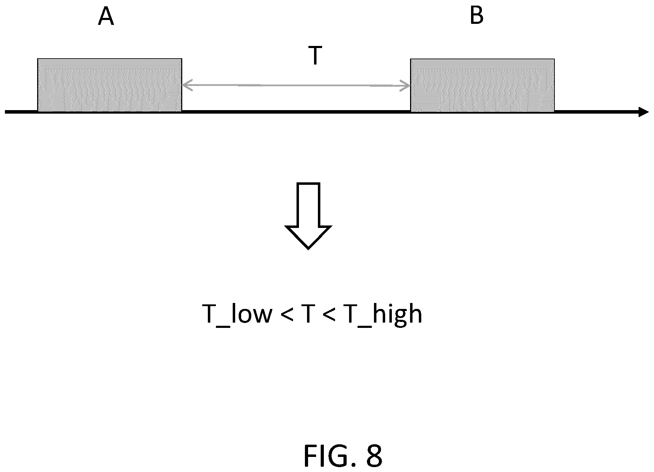

This data augmentation process allow to explore the "vicinity" of an example scenario, with respect to the chosen search criteria. The same principles could be applied to other any metric, e.g. to quantitative metrics and / or statistical metrics. In addition to this data augmentation, the user may be allowed to define ranges for each metric, using logical operators and thresholds as already disclosed herein. The same principles could be applied to durations of label temporal patterns as described by reference to FIG. 8.

For statistical metrics computed over a time window on the basis of several values of a metric, the user may also decide in view of the search results how to adjust the duration of the time window for the statistical metric or the time resolution for the computation of the values of the metric.

Another example of data augmentation for a search query may use a dichotomic search coefficient applied on a counter of events in a label temporal pattern. The process starts with the user choosing a first video. The user select a start time Ts and end time Te. In the selected video fragment, one can see 4 times the event "people entering the scene" (annotated as "e") one after the other, with no two entrances having a gap of more than 1 second, all happening within 4 seconds. The user for example chooses to search based on the label "e" using counters. The query synthesizer may implement here a dichotomic search using the initial scene as starting point. The basic regex pattern is:

$$r = \text{"e.*? e.*? e.*? e.*?"}$$

to capture 4 occurrences of "person enters scene", while allowing other activities to happen in between. The dichotomic search coefficient may be set to y = 2 (multiply/divide by 2) such that the augmented search query may be defined as:

$$Q_1, ..., Q_k = \{ 1/\gamma * r, r, \gamma * r\}$$

$$= \{\text{"e.*? e.*?"}, \text{"e.*? e.*? e.*? e.*?"}, \text{"e.*? e.*? e.*? e.*? e.*? e.*? e.*? e.*?"}\}$$

and the query to be executed by the query engine becomes:

$$Q_{disj} = Q_1 \vee Q_2 \vee ... \vee Q_k$$

(where $Q_k = Q_3$ in the example given with 3 criteria in the augmented search query) so as to search not only 4 occurrences of event "e", but also only 2 occurrences of event "e" and 8 occurrences of event "e". The result visualizer presents the user with videos having at least 2, 4, 8 events of type "e", along with the total number of occurrences within the video, and statistical metrics, i.e. minimum / maximum / average number of occurrences of event "e" with time resolution $\tau$ in each video. The user may then use these statistical metrics for further refinement of the search query may be performed. Several refinements may be performed. According to a first refinement, the user decides to refine the search query for at least 6 occurrences of "e". The search query may be expressed as:

$$R_1 = \{\text{"e.*? e.*? e.*? e.*? e.*? e.*?"}\} \wedge Q_{disj}$$

Note that this type of refinement is a restriction. Another type of refinement could be a relaxation. For example, if $\boldsymbol{Q_{disj}}$ was looking for at least 4 people entering one after the other and the user decided that 3 such events are enough, then it may define the search query as

$$R_1 = \{\text{"e.*? e.*? e.*?"}\}$$

and $\boldsymbol{Q_{disj}}$ will no longer be part of the final query. According to a second refinement, the user may want to refine for at most 2 people per each window. The search query may here be expressed as:

$$R_2 = \{ \text{max} <= 2\} \wedge Q_{disj}$$

After the first and second refinements, the final query is obtained and may be expressed as:

$$\text{Final query} = R_1 \wedge R_2$$

Generally, as illustrated by FIG. 3, for each search criteria P1, P2, P3, P4 (e.g. defined based on a label), the query synthesizer may perform data augmentation to generate corresponding refined search criteria Q(P1), Q(P2), Q(P3), Q(P4).

FIG. 4 shows an example of user interface of a label temporal pattern editor 324A for a video showing vehicles and labels corresponding to activities. The user interface includes on the left hand side 3 timelines TL1, TL2, TL3 showing the occurrence of 3 activities corresponding to labels "vehicle turns right" (label ID=1), "vehicle turns left" (label ID=2), "vehicle stops" (label ID=4).

On the right hand side of FIG. 4, the user may use a drop down list D1, D2, D3 associated with each timeline to define a label temporal pattern: the user may select a label (item "include"), discard it (item "exclude"), define it as optional (item "optional") or replaceable in the label pattern by another label (item "replaceable"). Alternatively the user may use check boxes (not shown) associated with the timelines TL1, TL2, TL3 to select the label of interest.

The user may further change the order of the labels if another temporal order of the labels has to be searched. Alternatively the user may define a temporal pattern by entering a list of label IDs: 2, 4, 1, 1, 2 in a text field.

The user also may use the drop down list to generate one or more metrics for the associated label by selecting the item "count".

Further parameters may be defined such as: "Ignore activities order" to indicate that the temporal order of the labels may be different in the search results and "maximum time window" defining the size of a time window in which the temporal pattern of labels must be found.

FIG. 5 shows an example of user interface of a metric-based criteria editor 324B for a video showing vehicles, persons and labels corresponding to activities. The user interface includes on the left hand side 3 timelines TL1, TL2, TL3 showing the occurrence of 3 activities corresponding to labels "person opens vehicle door" (label ID=1), "person exits vehicle" (label ID=2), "vehicle turns left" (label ID=3).

As shown in the bottom part of FIG. 5, the user may edit data fields in a table in which each line define a search criteria. In the shown example, the two lines concern the label "person exits vehicle". In each line, the following data filed are defined: a label 510 (here, an activity), a metric 520 (here a counter), a mathematical operator 530 and a value 540 (here a threshold for the metric). Each of this data field may be edited by a user to select another label 510, select another metric 520, select or enter another mathematical operator 530, enter a new value 540. In the example of FIG. 5, the first line defines a first search criteria based on a metric "total activities per minute", with operator ">=' and value = 3 meaning that the search criteria is to search media items including the event with label "person exits vehicle", wherein this event occurs at least 3 times in the given time interval (e.g. a minute). The second line defines a second search criteria based on another metric "average activities per second", with operator ">=' and value = 0.06 meaning that the search criteria is to search media items including the event with label "person exits vehicle", wherein this event occurs on average (over the full media item) at least 0.06 times per second.

FIG. 6 shows a signal time diagram representing the variations over time of different metrics ML61 to ML67 and corresponding timelines, each timeline being associated with a timed label and a checked box to select the corresponding timeline. This signal time diagram can be used as a user interface of a signal-based criteria editor 324C is illustrated here by FIG. 6. The user may select one or more timelines to include a search criteria for the corresponding metric in a search criteria: the check-boxes 630 may be used for this selection. The user may draw a horizontal line 610 over the signal time diagram to define one or more thresholds for a metric. The user may draw a rectangle 620 over one or more timelines of the signal time diagram to select one or more time segments of one or more timelines, thereby selecting one or more temporal patterns of interest for this metric to be converted into search criteria on the basis of the variations over time of a metric occurring in the selected one or more time segments. By default, the complete timeline is selected and the variations over time of a metric occurring in the timeline are used as a temporal pattern of interest to be converted into a search criteria.

FIG. 7 shows a signal time diagram representing the variations over time of different metrics ML71 to ML77 and corresponding timelines, each timeline being associated with a timed label and a checked box 730 to allow a selection of the corresponding timeline. This signal time diagram can be used as a user interface of a signal-based criteria editor 324C is illustrated by FIG. 7. In contrast with FIG. 6, the metrics ML71 to ML77 of FIG. 7 have binary values and each metric may for example correspond to a detection / absence of detection of a specific event. The user may select a timeline to include a search criteria for the corresponding metric but here no threshold needs to be defined. This user interface may be used to define logical combinations of the corresponding events and / or temporal patterns of the corresponding events by selection of the corresponding timelines and / definition of a temporal order. As illustrated by FIG. 7, a text field 710 may be provided to allow the user to define a logical combination of temporal patterns. Like in FIG. 6, the user may draw a rectangle 720 over one or more timelines of the signal time diagram of FIG. 7 to select one or more time segments of one or more timelines, thereby selecting one or more temporal patterns of interest for this metric to be converted into search criteria on the basis of the variations over time of a metric occurring in the selected one or more time segments.

FIG. 8 shows an example of a simple label temporal pattern including 2 labels A and B with a time interval T between them. Handling temporal patterns is not very different from handling quantitative metrics, but one difference is that time is treated as a threshold to be discovered. Consider a seed query that returns a video that satisfies the temporal pattern based on labels A and B: 'A followed by B'. If the user wants to refine the search criteria using this temporal pattern, data augmentation may allow identification of the limits of the time interval T between the labels A and B. Then, the synthesizer generates T_high and T_low to refine the search criteria.

There is a diversity of languages that can be applied for specification of temporal patterns in user queries. For example:

- Untimed regular expressions may have limited ability to express temporal patterns;
- Metric Interval Temporal Logics (MITL) is very expressible and general; it may include: basics operators like Once_in (Interval), Eventually_in (Interval), Historically_in (Interval), Always_in (Interval), etc; these operators may be combined into more complex expressions by means of set operations;
- Ad-hoc implementation using Siddhi operators; Siddhi is a tool for Complex Event Processing that provides its own query language with temporal operators; some operators may express a sequence: FOLLOWED BY, SEQUENCE OF, etc; some operators may express temporal conditions: WITHIN T, AFTER T, FOLLOWED BY WITHIN T; in which T is a parameter that the user can change.

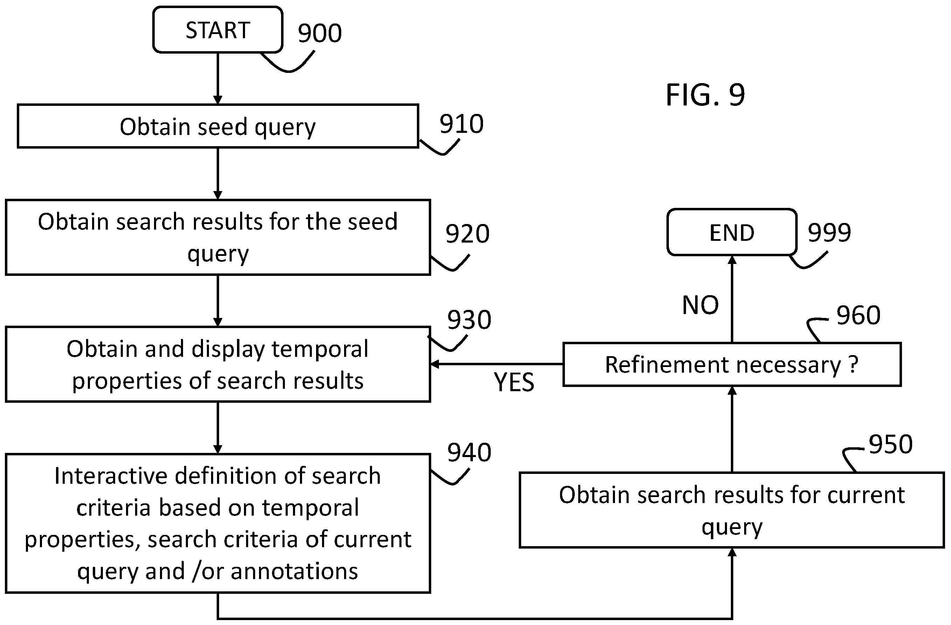

FIG. 9 shows a flowchart of a method for generating search queries. The method may be executed by a frontend 220 or 320 as disclosed by reference to FIG. 2 or 3. The method starts at step 900.

In step 910, a first current query (seed query) defined by a user is obtained. The first current query may include one or more search criteria.

In step 920, first search results resulting from a first search performed on timed annotated media items on the basis of the first current query are obtained and provided to the user. The first search results include at least one media item and one or more timed annotations of the at least one media item, the one or more timed annotations including one or more labels associated with timestamps. After step 920, step 930 is executed using the first current query as current query and the first search results as current search results.

In step 930, temporal properties of the retrieved at least one media item are obtained for the current search results and displayed for viewing and interaction (e.g. editing using some search criteria editor) by the user. The temporal properties are extracted on the basis of the one or more timed annotations, using the labels and associated timestamps of the current search results.

In step 940 an interactive definition of search criteria based on the temporal properties and /or search criteria of a current query and /or annotations may occur. The user may define a new query expressing at least one temporal constraint on the basis at least of the displayed temporal properties.

In step 950, new search results resulting from a search performed on timed annotated media items on the basis of the new query are obtained and provided to the user.

In step 960, the user determines whether a further refinement of the new query is necessary. If a further refinement of the new query is necessary, step 930 is executed again after step 960 using the new query as current query and the new search results as current search results. If no further refinement of the new query is necessary, the method ends with step 999.

Illustrative use case 1: Campus surveillance

Assume that there are multiple entrances to a building and the user is interested in learning which ones are "crowded" (i.e. have many people congregating near the entrance), for instance to send additional assistance for registering people entering through those entrances. The user may know what a crowded entrance looks like by viewing video footages covering such an entrance, but may find it difficult to express it as a query. For instance, the user may not be certain about the right annotations to be used in this case (because of limited knowledge of the labels used for annotating the video) or about the temporal range of the query, or about other quantitative metrics over time, like thresholds of number of people entering within a time window.

In this use case, the user may select a relevant piece of video, automatically deduce a time window of interest, then compute and display statistics on the number and frequency of activities relevant for the query, and then add constraints over these statistics as a way to define the user need. Specifically, once the user points out that the label of interest is "person enters building" for this specific video, then the statistics of this activity are calculated automatically and displayed along with the relevant video snippets, where "relevance" is decided according to other activities appearing on the scene as configured by the user. So, for example, the user may see that when at least 10 people entered within a 5 seconds time window - that is considered a "crowded entrance", and obtain the corresponding query.

Illustrative use case 2: Traffic analysis for Intelligent Transportation Systems

In a different scenario, the user may wish to determine that some malfunctioning car may be stalling the traffic. In this case, the refinement process would help the user to learn that for example, 1 car is staying on a road segment for longer than 10 minutes, while other cars remain on the same road segment for no longer than 3 minutes on average. This would be different from the case of traffic jams, in which the user may observe e.g. the same 10 cars for 10 minutes waiting at traffic lights and moving slowly. In the car stalling scenario, most of the cars would be moving in and out of the camera's view. Thus, the statistics on the time each car is seen on the screen would allow the user to differentiate between the relevant queries and results and create the right queries.

Illustrative use case 3: parking lot surveillance

The media selector 222 allows the user to select a specific video of interest (such as footage from camera X on day Y) and define the start and end time of the sample snippet that the user wishes to use as a seed query. Additionally, the user may select a specific area on the screen (for example, an entrance to a parking lot). Alternatively (and not covered by this invention) the user may use a natural language interface to find a seed video. For example, the user may search for "a person opens a car trunk" and select relevant video footage out of a list of suggestions

The user obtains the selected video, both the start and end times of the snippet that are later used to derive the time window of interest, annotations of activities seen in that snippet (for example, "person talks over the phone", "person opens trunk", "car with its fog lights turned on", "a red truck"), along with their start/end timestamps, and (optionally) an area of interest in pixels.

The search criteria editor 224, 324 may show the user a list of labels relevant to the selected video snippet, where the video snippet is the result of a seed query. Then the user refines the search criteria using the search criteria editor according to any method disclosed herein.

The user may further modify the time window of interest for the query, which is otherwise automatically deduced from the selected seed query video. The user may also restrict the query to a subset of cameras/video streams or to specific areas of interest within the video frame. The user may request that some annotations be associated to the same or different entities of interest in the scene. For example, "person A parks in parking lot P" and "person A enters building B" vs. "a person walks in parking lot P" and "a person talks on the phone in parking lot P".

The output of the definition of search criteria would be a set of parameters introduced by the user such as the time window size, location, included/exclude/optional annotations, list of annotations for which total / average / minimum / maximum number of occurrences per given time period or time united should be calculated.

The query synthesizer 213, 313 generates a number of candidate queries in a query language based on the set of parameters. For example, consider the case of looking at footage of a parking lot with one person walking to a car and another one standing and talking on the phone. At least two possible queries may describe the scene: "a person walking in parking lot P" and "a person talking on the phone in parking lot P". The query synthesizer 213, 313 may generate two distinct queries: a first query for all the cases where people talked on the phone and, separately, a second query for all cases with people walking in the parking lot. These queries are expressed in the query language of the database, for example, SQL. The results of the two queries will be presented to the user. The user may refine and indicate that, for example, she was interested only in people walking towards their car.

The query engine 211, 311 runs each query generated by the query synthesizer 213, 313 and retrieves the results for this interaction step. The output is the videos that were found to satisfy the search queries, including all their corresponding annotations and temporal properties and search criteria of the search queries executed to extract the results.

The results visualizer 221, 321 presents the results to the user and allows him/her to repeat the interaction. At this point a plurality of "semantically augmented" video snippets are shown to the user accompanied with all the annotations that appear in the snippets and with relevant temporal properties, e.g. counters selected by the user or other relevant temporal properties automatically proposed to the user.

The user may refine the search criteria of the search query based on the additional annotations and the counters. For example, if some undesired annotation appeared, the user may choose to exclude the corresponding video(s). This will be reflected thereafter in the annotations selection and configuration component. Another example is refinement based on some counter. In such a case, the user is presented with the number of relevant annotations in videos (e.g. "3 people entered the building" in video A, "5 people entered the building" in video B). The user may then choose to see only videos with at least 5 people entering the building, for example.

The output is all the videos that the user selects as relevant to his/her intent, along with the corresponding queries and (possibly adjusted) parameter values. The final query would be a union of queries if more than one query captures the different videos (example: "a person texting while walking" could be either one of "texting then walking", "walking then texting", "started texting and walking at the same time")

Optionally, each output result would be accompanied with a user-friendly description of the query/queries that was/were determined to capture the user's need. This could be done, for example, by looking up similar queries from a database of existing queries.

It should be appreciated by those skilled in the art that any functions, engines, block diagrams, flow diagrams, state transition diagrams and / or flowcharts herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processing apparatus, whether or not such computer or processor is explicitly shown.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

Although a flow chart may describe operations as a sequential process, many of the operations may be performed in parallel, concurrently or simultaneously. In addition, the order of the operations may be re-arranged or may sometimes be executed in the reverse order, depending upon the operations involved. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

Each described computation function, block, step can be implemented in hardware, software, firmware, middleware, microcode, or any suitable combination thereof. If implemented in software, the computation functions, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause an apparatus to perform the necessary tasks. Additionally, the processor, memory and example algorithms, encoded as computer program code, serve as means for providing or causing performance of operations discussed herein.

In the present description, block denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used in this application, the term "circuit" or "circuitry" may refer to one or more or all of the following:

(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of "circuit" or "circuitry" applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device. The term circuitry may cover digital signal processor (DSP) hardware, network processor, application specific integrated circuit (ASIC), field programmable gate array (FPGA), etc.

The "circuit" or "circuitry" may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The "circuit" or "circuitry" may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via a radio network (e.g., after being down-converted by radio transceiver, for example).

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

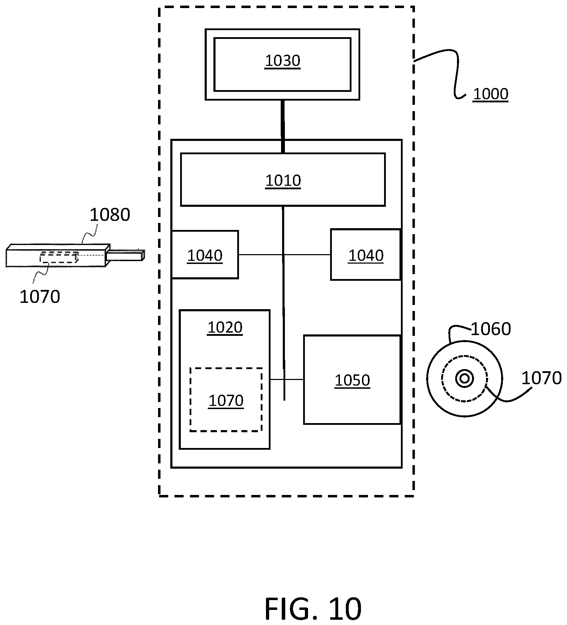

For completeness, FIG. 10 is a schematic diagram showing components of an apparatus (1000). The apparatus (1000) may include one or more or all of the functional components described by reference to FIGS. 2 or 3. The apparatus (1000) may therefore include means for performing the functions defined herein for at least one of these entities. For example, a front-end apparatus may include one or more or all of the functional components described for the front-end 220 or 320. For example, a back-end apparatus may include one or more or all of the functional components described for the back-end 210 or 310.

The apparatus (1000) may be implemented as a single hardware device, for example in the form of a desktop personal computer (PC), a laptop, a personal digital assistant (PDA), a smart phone, a server, a console or may be implemented on separate interconnected hardware devices interconnected by one or more communication links, with wired and/or wireless segments. The apparatus (1000) may for example be in communication with one or more cloud computing systems, one or more remote servers or devices to implement the functions described herein for the concerned apparatus. The apparatus (1000) may also be implemented itself as a cloud computing system.

As represented schematically on FIG. 5, the apparatus (1000) may include at least one processor (1010), at least one memory (1050), and one or more communication interfaces (1040) (e.g. network interfaces for access to a wired / wireless network, including Ethernet interface, WIFI interface, USB interfaces etc) configured to communicate via network and / or to one or more peripheral devices (including a computer-readable storage medium 5080). The apparatus (1000) may include other associated hardware such as user interfaces (1030) (e.g. keyboard, mice, display screen, etc) connected via appropriate communication interface(s) (1040) with the processor. The apparatus (1000) may further include a media drive (1050) for reading a computer-readable storage medium 5060. The processor (1010) is connected to each of the other components in order to control operation thereof.

The processor (1010) may be configured to store, read, load and/or otherwise process computer program code (1070) stored in a computer-readable storage medium (1060) or 5080 and / or in the memory (1050) that, when executed by the at least one processor, causes the apparatus (1000) to perform one or more steps of a method described herein for the concerned apparatus (1000).

The processor (1010) may be any suitable microprocessor, microcontroller, integrated circuit, or central processing unit (CPU) including at least one hardware-based processor or processing core.

The memory (1050) may include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory (1050) may be configured to store, amongst other things, an operating system of the apparatus (1000) and / or one or more computer program code of one or more software applications. The RAM of the memory (1050) may be used by the processor (1010) for the temporary storage of data.

Embodiments of a computer-readable medium (1060), (1080) includes, but are not limited to, both computer storage media and communication media including any medium that facilitates transfer of a computer program from one place to another. Specifically, program instructions or computer readable program code to perform embodiments described herein may be stored, temporarily or permanently, in whole or in part, on a non-transitory computer readable medium of a local or remote storage device including one or more storage media.

As used herein, a computer storage medium (1060), (1080) may be any physical media that can be read, written or more generally accessed by a computer / a apparatus. Examples of computer storage media include, but are not limited to, a flash drive or other flash memory devices (e.g. memory keys, memory sticks, USB key drive), CD-ROM or other optical storage, DVD, magnetic disk storage or other magnetic storage devices, solid state memory, memory chip, RAM, ROM, EEPROM, smart cards, a relational database management system, a traditional database, or any other suitable medium from that can be used to carry or store program code in the form of instructions or data structures which can be read by a computer processor. Also, various forms of computer-readable medium may be used to transmit or carry instructions to a computer, including a router, gateway, server, or other transmission device, wired (coaxial cable, fiber, twisted pair, DSL cable) or wireless (infrared, radio, cellular, microwave). The instructions may include code from any computer-programming language, including, but not limited to, assembly, C, C++, Basic, SQL, MySQL, HTML, PHP, Python, Java, Javascript, etc.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

List of abbreviations

CV - Computer Vision
DB - Database
QBE - Query by Example
SQL - Structured Query Language

**Claims**

1. A method comprising

    - obtaining (910) a first user query defined by a user;
    - providing (920) a user with first search results resulting from a first search performed on timed annotated media items on the basis of the first user query, wherein the first search results include at least one media item and one or more timed annotations of the at least one media item, the one or more timed annotations including labels associated with timestamps;
    - displaying (930) temporal properties of the at least one media item, the temporal properties being determined on the basis of the one or more timed annotations;
    - allowing (940) the user to define on the basis of the displayed temporal properties a second user query expressing at least one temporal constraint;
    - providing (950) the user with second search results resulting from a second search performed on timed annotated media items on the basis of the second user query.

2. The method according to claim 1, wherein allowing the user to define the second user query comprises allowing the user to select among the displayed temporal properties at least one temporal property of interest and to define a parameter of the at least one temporal constraint based on the at least one temporal property of interest.

3. The method according to claim 1 or 2, wherein the displayed temporal properties include at least one value of a metric and at least one mathematical operator applicable to the metric, wherein the at least one value together with the at least one mathematical operator express at least one search criterion fulfilled by the at least one media item.

4. The method according to any of claims 1 to 3, wherein the displayed temporal properties include at least one value of a metric, wherein allowing the user to define a second user query comprises allowing the user to adjust the at least one value, wherein the at least one temporal constraint is defined based on the adjusted value.

5. The method according to claim 4, wherein the displayed temporal properties include at least one mathematical operator applicable to the metric, wherein allowing the user to define the second user query comprises allowing the user to modify the mathematical operator, wherein the at least one temporal constraint is defined based the modified mathematical operator.

6. The method according to any of claims 1 to 5, wherein the displayed temporal properties include a time diagram representing variations over time of a metric, wherein allowing the user to define the second user query comprises allowing the user to define a threshold on the time diagram so as to define the at least one temporal constraint on the basis of the threshold and the metric.

7. The method according to any of claims 1 to 6, wherein the displayed temporal properties include a time diagram representing variations over time of a metric, wherein allowing the user to define a second user query comprises allowing the user to select a portion of the time diagram corresponding to a time period of interest corresponding to so as to define the at least one temporal constraint on the basis of the variations over time of the metric in the time period of interest.

8. The method according to any of claims 1 to 7, wherein the temporal properties include at least one statistical temporal property computed over a time window on the basis of the labels and timestamps associated with the timed annotations.

9. The method according to any of claims 1 to 8, wherein the temporal properties include at least one temporal pattern detected in the at least one media item on the basis of the labels and timestamps associated with the timed annotations.

10. An apparatus comprising

- means (222, 223) for obtaining (910) a first user query defined by a user;
- means (221) for providing (920) a user with first search results resulting from a first search performed on timed annotated media items on the basis of the first user query, wherein the first search results include at least one media item and one or more timed annotations of the at least one media item, the one or more timed annotations including labels associated with timestamps;
- means (224) for obtaining and displaying (930) temporal properties of the at least one media item, the temporal properties being determined on the basis of the one or more timed annotations;
- means (224) for allowing (940) the user to define on the basis of the displayed temporal properties a second user query expressing at least one temporal constraint;
- means (221) for providing (950) the user with second search results resulting from a second search performed on timed annotated media items on the basis of the second user query.

11. A non-transitory computer-readable medium storing computer-executable instructions that, when executed by at least one processor at an apparatus, cause the apparatus to perform a method according to any of claims 1 to 9.

FIG. 1

FIG. 2

FIG. 3

| Activity | Configuration |
|---|---|
| ▦ Vehicle turns right | optical ⟋D1 |
| ▦ Vehicle turns left | optional ⟋D2 |
| ▦ Vehicle stops | include ⟋D3 |

include
exclude
optional
replaceable
count

**ID**

| TL1 | 1 | ▨ Vehicle turns right | | | |
| TL2 | 2 | ▨ Vehicle turns left | | |
| TL3 | 4 | Vehicle stops ▨ | |

time     20    30    40    50    0    10

Ignore activities order ◯⊃

Associate activities with the same actor ◯⊃

Max time window (in seconds)

10

Location (e.g. camera name)

G420

Fig. 4

TL1  | 1 | ▨ Person opens vehicle door
TL2  | 2 | ▨ Person exits vehicle
TL3  | 3 | ▨ Vehicle turns left

time  30    35    40    45    50    55    0    5    10    15

| Activity~510 | Counter~520 | Operator~530 | Value~540 |
| --- | --- | --- | --- |
| Person exits vehicle | Number of activities per second | >= | 3 |
| Person exits vehicle | Average number of activities | >= | 0.06 |

Fig. 5

Fig. 6

EP 4 109 299 A1

Fig. 7

UQ1=(ML72 OR ML73) AND ML77

A      B

T

$$T\_low < T < T\_high$$

FIG. 8

FIG. 9

START ⌐ 900

Obtain seed query ⌐ 910

Obtain search results for the seed query ⌐ 920

Obtain and display temporal properties of search results ⌐ 930

Interactive definition of search criteria based on temporal properties, search criteria of current query and /or annotations ⌐ 940

Refinement necessary ? ⌐ 960

END ⌐ 999

NO

YES

Obtain search results for current query ⌐ 950

FIG. 10

Europäisches
Patentamt

European
Patent Office

Office européen
des brevets

# EUROPEAN SEARCH REPORT

Application Number

EP 21 18 1498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/243614 A1 (MATEJKA JUSTIN FRANK [CA] ET AL) 24 August 2017 (2017-08-24) * paragraphs [0034], [0037] - [0039], [0043], [0044], [0070] - [0072], [0074] - [0076], [0078], [0079], [0082], [0083], [0085], [0086] * * figures 9, 10, 12-14, 17, 18 * | 1-11 | INV. G06F16/44 |
| X | WO 2017/124116 A1 (BAO SHENG [US]; LIU YANG [US]) 20 July 2017 (2017-07-20) * paragraphs [0003], [0120], [0125], [0126], [0132], [0134], [0226], [0227], [0241], [0258], [0259], [0267], [0340] * * paragraphs [0392], [0399], [0401], [0402], [0404], [0444], [0446], [0447], [0449] * * paragraphs [0451], [0457], [0459], [0465], [0466], [0509], [0512], [0514] * * figures 4A, 26, 31, 39, 41 * | 1-11 | |
| X | US 2021/067535 A1 (CHAUHAN VIJAY [US] ET AL) 4 March 2021 (2021-03-04) * paragraphs [0090], [0093], [0095], [0099], [0134], [0136], [0137], [0160], [0161] * * paragraphs [0164], [0165], [0168], [0174], [0195], [0232], [0233], [0234], [0295], [0297] * * figures 3, 6A, 6B, 7C, 9B, 9D, 12A, 12B, 13, 16-18, 32-34 * | 1-11 | TECHNICAL FIELDS SEARCHED (IPC) G06F |

The present search report has been drawn up for all claims

| Place of search | Date of completion of the search | Examiner |
|---|---|---|
| The Hague | 25 November 2021 | Martínez Espuche, F |

EPO FORM 1503 03.82 (P04C01)

## ANNEX TO THE EUROPEAN SEARCH REPORT
## ON EUROPEAN PATENT APPLICATION NO.

EP 21 18 1498

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2021

| Patent document cited in search report | | | Publication date | Patent family member(s) | | | Publication date |
|---|---|---|---|---|---|---|---|
| US 2017243614 | A1 | | 24-08-2017 | US | 2015269968 | A1 | 24-09-2015 |
| | | | | US | 2017243614 | A1 | 24-08-2017 |
| WO 2017124116 | A1 | | 20-07-2017 | NONE | | | |
| US 2021067535 | A1 | | 04-03-2021 | US | 9516052 | B1 | 06-12-2016 |
| | | | | US | 2017048264 | A1 | 16-02-2017 |
| | | | | US | 2018069887 | A1 | 08-03-2018 |
| | | | | US | 2019166146 | A1 | 30-05-2019 |
| | | | | US | 2021067535 | A1 | 04-03-2021 |

EPO FORM P0459

For more details about this annex : see Official Journal of the European Patent Office, No. 12/82